# EUROPEAN PATENT SPECIFICATION

(11) **EP 3 625 118 B1**
(45) Date of publication and mention of the grant of the patent: **01.05.2024**
(21) Application number: 18801449.2
(22) Date of filing: 15.05.2018
(51) Int. Cl.: B63B 22/02, B63B 22/04

(54) **BUOY COMPRISING LIGHT WEIGHT ARMATURE FOR WEIGHT TRANSFER**
BOJE MIT LEICHTGEWICHTSARMATUR ZUR GEWICHTSÜBERTRAGUNG
BOUÉE COMPRENANT UNE ARMATURE LÉGÈRE POUR TRANSFERT DE POIDS

(30) Priority: 19.05.2017 NO 20170821
(43) Date of publication of application: 25.03.2020
(73) Proprietor: UVUN AS, 6301 Åndalsnes (NO)
(72) Inventor: SAMUELSEN, Tom, 2007 Kjeller (NO); FLYDAHL, Oddgeir, 6320 Isfjorden (NO)
(74) Representative: Zacco Norway AS
(86) International application number: PCT/NO2018/050126
(87) International publication number: WO 2018/212663

(56) References cited:
- GB-A- 382 726
- US-A- 2 903 990
- US-A- 3 950 806
- US-A- 4 875 427
- US-A- 5 016 554
- US-B1- 6 503 115
- US-B1- 9 242 702

## Description

The present invention relates to the art of buoys and specifically to load transfer through the buoy.

Marine buoys and mooring buoys often need to transfer load through the buoy, for example when lifting equipment or anchor assemblies.

The connection point on the buoy must transfer the pulling force load of the connected load through the buoy to the mooring line of the mooring. There is a relationship between the size of the buoy and the load capacity, since the connecting line through the buoy needs to be carried by the buoy as well as the buoy weight. The most commonly used connecting lines are galvanized steel anchor chains due to the strength and durability in harsh sea conditions of the galvanized steel material. The problem using galvanized steel anchor chain as connecting line through the buoy is that the cost of production, mounting arrangement and weight is high. Specifically the weight of the steel has a negative effect on the buoyancy budget, and hence the required size and buoyancy capacity of the buoy.

The use of a linked steel chain through the buoy, limits the use of the buoy since there are, established requirements and industry standards prohibiting the use of linked chains in lifting operations in offshore environments. This makes lifting operations of anchors and connected equipment demanding, as anchor connection means on the lower connection point on the buoy also need to comprise connection means for lifting equipment.

There are a further problems related to galvanic corrosion when using galvanized chains in aquaculture industry and offshore industry where there often is other equipment comprising various elements of steel,. Hence the chains cannot be galvanized, resulting in short lifetimes and rapid strength decay due to wear and tear in the marine environment.

In US 4875427 A it is described a boat fender provided with internal capacity for storage of the rope from which it is normally suspended when in use. A mechanism is also provided retaining the rope when it is in storage, and for quick release of the rope when it is withdrawn from storage for use in suspending the boat fender. US 2 903 990 A discloses a marine fender comprising a body having a plurality of bumper elements each having an axial opening, wherein two stretches of a rope pass through said opening and are secured to respective retainer plugs at upper and lower ends of the fender.

It is an object of the invention to provide a solution to at least one of the above problems.

It is an object of the invention to provide improved characteristics of a mooring buoy in view of cost of production, assembly arrangement of load line through the buoy, and the relative buoyancy of the buoy.

It is an aim to provide a lifting arrangement of the buoy and its load and anchor assemblies that can be accessed from the upper side of the buoy, and that can be used in a variety of marine industrial environments. It is an object of the invention to provide a mooring buoy comprising mainly plastics and rope, such as polymer based ropes.

It is further an object of the invention to provide a novel concept of transferring the load weight between the upper and lower attachment means.

It is an object of the invention to provide a buoy that is lighter and less costly to produce and maintain, and which is more applicable and easier to use.

These objects are achieved by a buoy according to claim 1. Preferred embodiments are disclosed by the dependent claims.

Further objects, advantages and capabilities will be described in the description and exemplified in the figures.

The individual features may be described and explained in combination with certain other features in the description and figures, but it should be understood that the features may be combined in any number or order independent on the embodiments in which they are explained here. It is the claims that shall define the protection scope.
Fig. 1 - Side view of buoy with armature
Fig. 2 - Front view of armature of buoy shown in fig. 1
Fig. 3A - Oblique view of buoy shown in fig. 1
Fig. 3B - Oblique view of buoy without attachment device and strengthening plate
Fig. 3C -Strengthening plate
Fig. 4 - Topside attachment device from below
Fig. 5 - Oblique view of topside attachment device with shackle attachment fog mooring line
Fig. 6 - Front view of topside attachment device
Fig. 7 - cross section side view of topside attachment device
Fig. 8 - Front view of bottom side attachment device
Fig. 9A - Side view of bottom side attachment device
9B - cross section side view of bottom side attachment device
Fig. 10 - Oblique view of bottom side attachment device with locking ring and shims for armature tension adjustment
Fig. 11A - Parts of figure 10 mounted
Fig. 11B - Bottom side attachment device mounted with rope
Fig. 12 - Buoy example with mooring load and anchor

When the phrase rope or line is used in this document, it should be understood that it is comprised of any type of light weight material or combination of materials, synthetic and natural, usable for being provided in a rope form for use in lifting tasks.

When the phrase light weight material is used in this document, it should be understood that it may be chosen from one of fiber, natural fiber, polymer based material, or a combination thereof. The lightweight materials will typically not constituting a metal or an alloy, however it can be envisaged that elements of metals are used for enhanced characteristics.

A buoy may often be produced by combining a roto-molded polyethylene outer shell with a core composed of for example expanded polystyrene. Other materials and fillings may well be used.

The buoy may be used for attaching floating or submerged equipment, such as a floating vessel, a pipeline or may be used as a light buoy, or other. It is often connected to an anchor in one end, and providing a mooring shackle or the like in the other end. Between the anchor connecting means and the mooring connecting means the combined load weight has to be transferred between the two connecting means. The buoy itself may be floating or submerged.

The common way to provide this is to provide a steel chain, often galvanized to minimize corrosion, and the higher load the higher dimension of chain and connecting means.

Often the weight of the chain and connecting means represent a major part of the requirements for buoyancy of the buoy. Thus, the larger load capacity the larger buoy has to be.

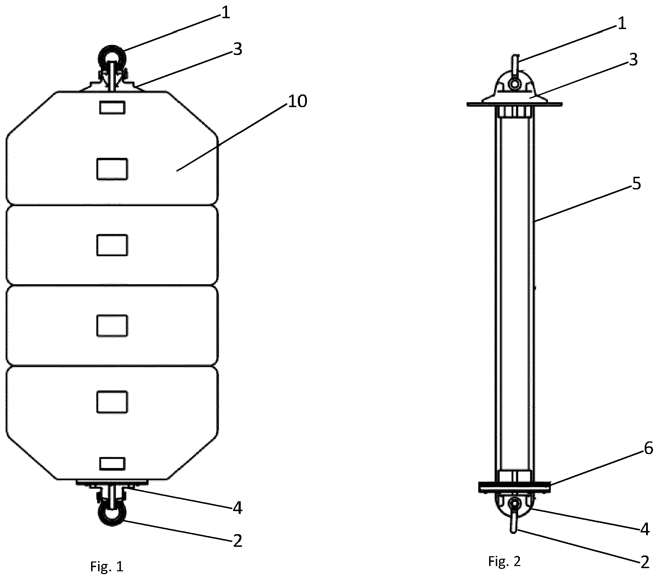

Figure 1 illustrates one embodiment of a buoy 10 in accordance with present invention, and figure 2 shows details of the weight transfer armature 3, 4, 5 of the present invention. The traditional galvanized chain is substituted by a rope or internal connecting means between the anchor connecting means 4 and the mooring connecting means 3 produced of a light weight endurable and strong material such as a fiber rope. The rope may be formed as a singular unbroken loop of a length adapted to the height of the buoy. The loop engages in rope recess 7' over the anchor connecting means 4 and in rope recess 7 in the mooring connecting means 3. In one embodiment the loop 5 is strung inside the buoy to define the shortest distance between the anchor connecting means 4 and the mooring connecting means 3. Several loops of rope may be used to increase capacity (not shown).

Alternative rope designs may be that one or more single strings of rope is strung between the upper and lower connecting means, and being attached to the connecting means in rope connecting means specifically designed to provide a durable and solid connection (not shown).

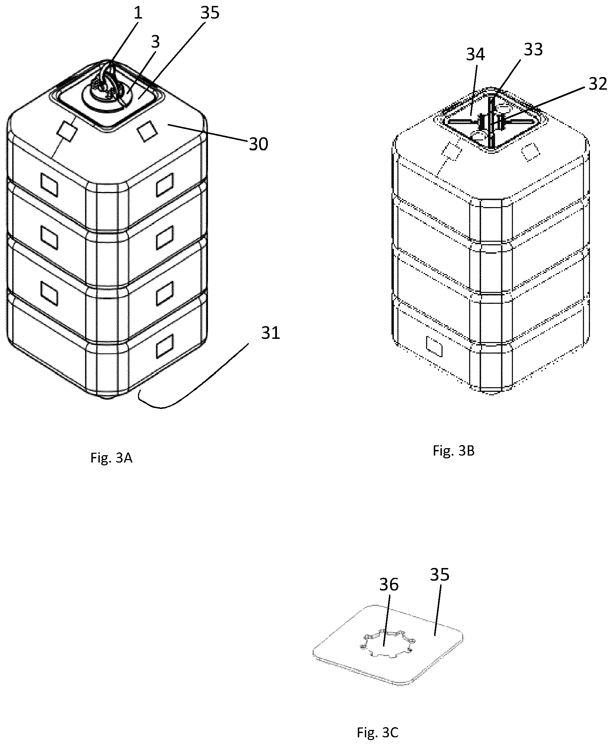

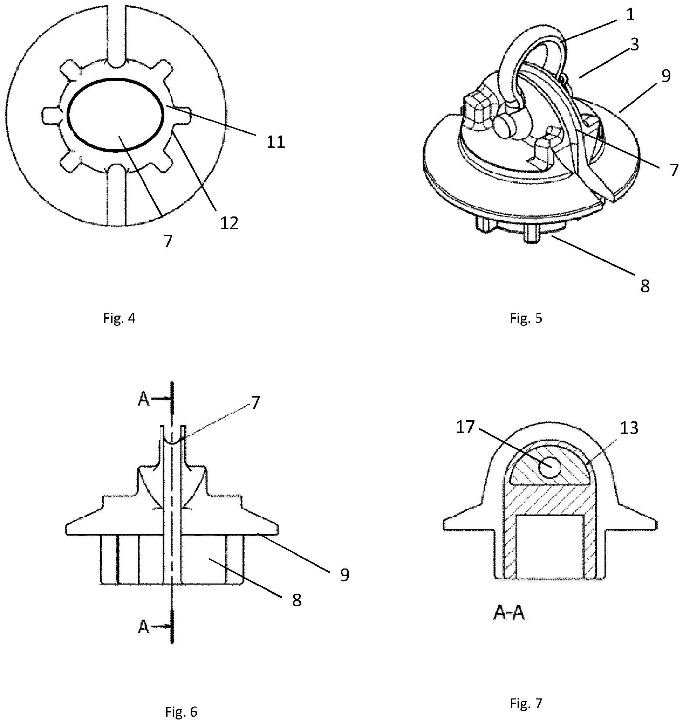

Figure 3A and 3B illustrates one embodiment of a buoy 10 having a top side 30 and a bottom side 31 providing mainly plane surfaces wherein a recess 32, as shown in figure 3B, is provided for receiving either the anchor connecting means 4 or the mooring connecting means 3. The outline of the recess 32 corresponds to the outline of the lower portion 8, 15 of either the anchor connecting means 4 or the mooring connecting means 3. The top and bottom side may further be formed with a recess 34 for receiving a strengthening plate 35. The function of the strengthening plate 35, as shown in figure 3C is to provide an extra wide area for distribution of the stress on the buoy wall caused by the anchor connecting means 4 or the mooring connecting means 3. The buoy recess 34 may have further alignment recesses 33 for provided for engaging with corresponding ridges on the underside of the strengthening plate 35 (not shown). The strengthening plate 35 comprises an opening 36 having a corresponding form as the top and bottom side recess 32. The top and bottom side recesses 32 are typically connected to provide a through channel through the whole buoy, and thereby providing a channel for threading the fiber ropes 5. The top and bottom side may have equal design comprising recess 34 for receiving a corresponding strengthening plate 35. Figure 4 and 5 shows in more detail how the mooring connecting means 3 for attachment to the topside of the buoy 10 may be designed to provide a lifting contact means for the load and anchor assembly. The mooring connecting means 3 is further comprising a protruding lower portion 8 to be inserted into a corresponding recess in the topside of the buoy, and a disk 9 being designed to but against the outer surface of the buoy and strengthening plate 35, and function as a stopper disk such that the mooring connecting means 3 is not pulled into the buoy 10 when load pull is increased, or when rope 5 is tightened. The lower portion may further be designed to be formed with a kernel 11 and longitudinal ridges 12 forming a gripping pattern which will provide a gripping feature when the mooring connecting means 3 is inserted into a corresponding recess 32, 36 in the buoy 10 and strengthening plate 35. This way the mooring connecting means 3 is gripped and biased to not twist in the buoy, and the ropes 5 connecting the anchor connecting means 4 and the mooring connecting means 3 will not tangle if the buoy rotates relative the mooring or load.

Figure 6 and 7 is a side view and a cross section view respectively of the mooring connecting means 3. In one embodiment, for which the mooring capacity of the buoy must be further strengthened, the mooring connecting means 3 may comprise a first insert 13 of strengthening material, such as steel. The first insert 13 which is molded into the mooring connecting means 3, provides increased shear strength in the connecting point for a mooring shackle 1 or other connected lifting tool equipment. The mooring connecting means 3 may further comprise a first through hole 17, corresponding to a hole in the first strengthening insert 13, if present, for attachment of a first shackle 1.

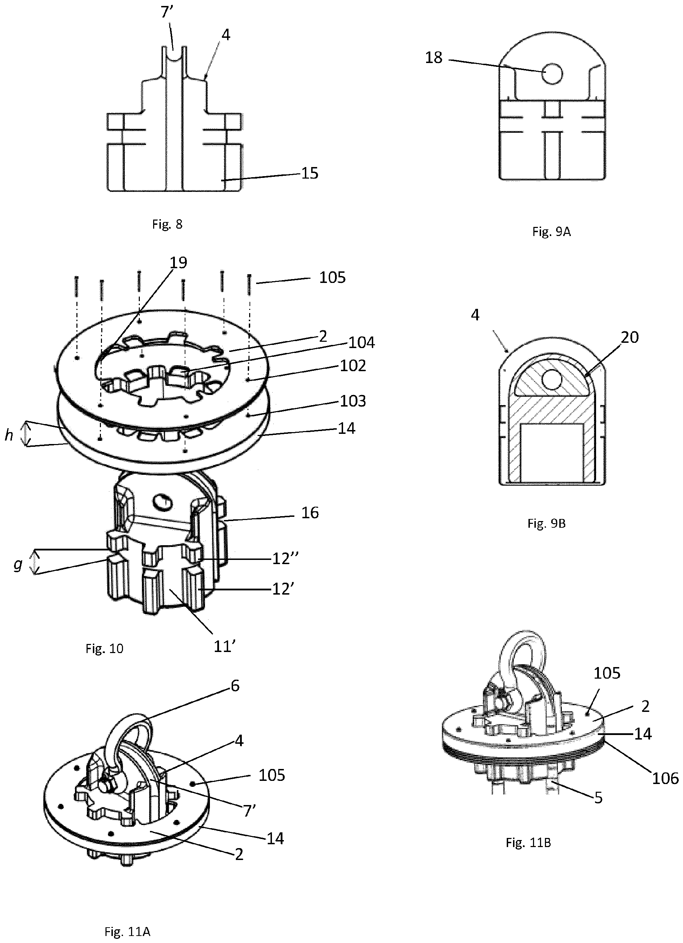

Figure 8, 9A and 9B is a side view and a cross section view respectively of the anchor connecting means 4. For heavier mooring capacity of the buoy according to the present invention a second strengthening insert 20 may be molded into the anchor connecting means 4 in the same manner as explained for the mooring connecting means 3 above, providing an increased shear strength in the anchor connecting means 4 for example for the anchor assembly 120, 121 shackle 6. The anchor connecting means 4 may further comprise a second through hole 18, corresponding to a hole in an optional second strengthening insert 20, if present, for attachment of a second shackle 6.

Figure 10, 11A and 11B shows in more detail how the anchor connecting means 4 for attachment to the bottom side 31 of the buoy 10 may be designed to provide fastening and tightening of the weight transfer armature 5. The anchor connecting means 4 may comprise a protruding lower portion 15 to be inserted into a corresponding recess 32, 36 in the bottom side 31 of the buoy and corresponding strengthening plate 35, and a mountable disk assembly 2, 14 being designed to but against the outer surface of the buoy 10, and function as a stopper disk such that the anchor connecting means 4 is not pulled into the buoy 10 when load pull is increased, or when rope 5 is tightened. A strengthening plate 35 may be arranged in the same manner as on the top side 30. The lower portion 15 is designed to be formed with a kernel 11' and longitudinal ridges 12', 12" forming a gripping pattern which will provide a gripping feature when the anchor connecting means 4 is inserted into a corresponding recess 32, 36 in the buoy 10 and strengthening plate 35. This way the anchor connecting means 4 is gripped and biased to not twist in the buoy, and the ropes 5 connecting the anchor connecting means 4 and the mooring connecting means 3 will not tangle if the buoy rotates relative the mooring or load. The anchor connecting means 4 comprise a rope tightening feature in that the mountable disk assembly 2, 14 comprise a first safety ring 14, and a second lock ring 2. The first safety ring 14 is chosen in a thickness necessary for providing required stretch in the weight transfer armature 5 when mounted. The anchor connecting means 4 kernel 11' provides longitudinal ridges 12', 12" having a lower portion 12', a glitch 16 and an upper portion 12", and thereby providing a threading characteristics such that a ring 2, 14 having an opening corresponding to the contour form of the kernel 11'and ridge 12', 12" of the anchor connecting means 4 can be threaded down over the anchor connecting means 4 and twisted a fraction in the glitch 16. The first safety ring 14 is chosen to have a thickness h corresponding to a distance g of the glitch 16 between the lower portion 12'and the upper portion 12" of the longitudinal ridges 12', 12". If using a first safety ring 14 having to small thickness h, it may be provided additional shims rings 106, between the first safety ring 14 and the strengthening plate 35 or the bottom side 31 of the buoy 10, having the same profile as the first safety ring 14, or having an inner diameter adapted to encircle outside the longitudinal ridges 12', 12", such that the sum of the shims rings and the first safety ring 14 thickness equals the distance g of the glitch 16 between the lower portion 12'and the upper portion 12" of the longitudinal ridges 12', 12". When the first safety ring is twisted sideways such that the solid section 104 of the first safety ring 14 pattern will be arranged in the glitch 16 and abut towards the underside of the upper portion of the ridge 12", and thus be prohibited for gliding back a long the anchor connecting means 4. The solid section 104 of the first safety ring 14 pattern may provide a small recess for biasing a small retaining force holding the first safety ring 14 in place until the second lock ring 2 is subsequently threaded over the anchor connecting means 4. The first lock ring 2 comprises locking means 102 for locking the second lock ring 2 to the first safety ring 14 when mounted. The locking means may be holes and threads 102 for receiving a screw with corresponding threads, where the screw holes 102 have corresponding holes 102, 103 in both the second lock ring 2 and the first safety ring 14, such that screws 105 may be screwed into both the second lock ring 2 and the first safety ring 14 and thus lock them together. This way the first safety ring 14 is prohibited from turning out of the locking engagement with the underside of the upper portion of the ridges 12". Screws 105 may be substituted by other connecting means, such as plugs, glue, soldering, welding joints, spikes and other. The openings in the ring 2, 14 including a wider opening 19 for the rope position allowing a twisting of the first safety ring 14 when arranged over the anchor connecting means 4.

The glitch 16 height is defined by the distance g between the lower portion 12'and the upper portion 12" of the longitudinal ridges 12', 12". The distance g is adapted to correspond to the thickness h of the first safety ring 14.

In one embodiment of the invention the rope 5 connecting the anchor connecting means 4 and the mooring connecting means 3 is chosen at a length providing a fairly tight fit. When the rope 5 is threaded through the buoy 10 and over the anchor connecting means 4 and the mooring connecting means 3, which is arranged in their respective recesses 32 in the buoy 10, and the rope 5 is tight whence the protruding lower portion 15 of the anchor connecting means 4 inserted into the bottom side 31 of the buoy 10 is showing the glitch 16 just visible outside the recess. When the first safety ring 14now is arranged over the anchor connecting means 4 and twisted it will hold the anchor connecting means 4 in a way offering a biased stretch force to the rope 5. In a further embodiment a better connection between the buoy 10 and the armature 3,4,5 is achieved if the length of the rope 5 is chosen just a fraction shorter such that the anchor connecting means 4 has to be pulled outwards from the recess to be able to arrange the mountable disk assembly 2, 14 correctly.

The mountable disk assembly 2, 14 will when mounted create an effective butting action against the outer surface of the buoy, and function as a stopper disk such that the anchor connecting means 4 is not pulled into the buoy 10 when load pull is increased, or when rope 5 is tightened

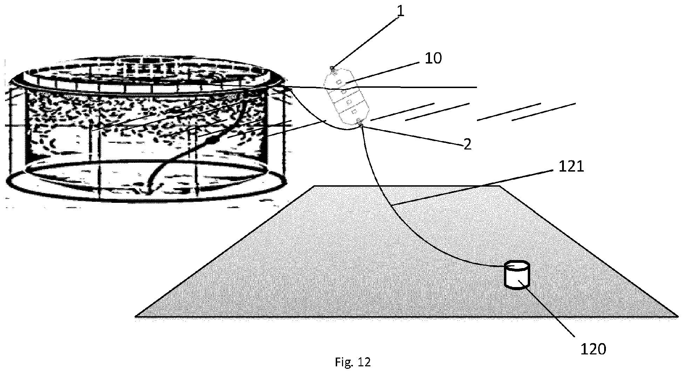

In figure 12 there is provided an example of a system using of the buoy 10 in accordance with present invention as a mooring of a fish farm.

The following aspects do not form part of the invention and may exemplify the above discussed features.

A buoy comprises:
a body 10 having at least a top side 30 and a bottom side 31 ,
the buoy having a through hole 32 extending from the topside to the bottom side, and
a first connecting means 3 arranged in the top side 30,
a second connecting means 4 arranged in the bottom side 31, and
a rope 5 arranged for connecting the first connecting means 3 and the second connecting means 4, wherein the rope 5 , the first connecting means 3 and the second connecting means 4 constitutes an armature 3,4,5, the armature 3,4,5 extents through the through hole, the first connecting means 3, wherein the armature 3,4,5 being made of a light weight material.

The light weight material is chosen from one of fiber, natural fiber, polymer based material, or a combination thereof.

A further strengthening plate 35 is arranged in the recesses 32 of the top side 30 and the bottom side 31 providing extra support for the first connecting means 3and the second connecting means 4.

The armature 3,4,5 is one or more ropes in the form of a singular unbroken loop.

The armature 3,4,5 is one or more single strings of rope strung between the upper and lower connecting means, and each rope end is attached in a first end to the mooring connecting means 3, and in the second end to the anchor connecting means 4.

The first connecting means 3 comprises a protruding lower portion 8 and an upper portion having the form of a disk 9, wherein the disk 9 being peripherally bound to the lower portion 8 and presenting a flat lower surface for abutment against the first surface 30.

The upper portion of the first connecting means 3 comprises a first through hole 17 and a first shackle 1, the first shackle 1 being arranged in the first through hole 17.

The first connecting means 3 comprises a first strengthening insert 13 molded into the first connecting means 3 for providing an increased shear strength when attaching lifting tools.

The second connecting means 4 comprises a protruding lower portion 15, the lower portion 15 comprising a kernel 11' having longitudinal ridges 12', 12" for forming a gripping pattern which will provide a gripping feature when the second connecting means 4 is inserted into the corresponding recess 32 in the buoy 10.

The upper portion 4 of the second connecting means 4 comprises a second through hole 18 and a second shackle 6, the second shackle 6 being arranged in the second through hole 18.

The second connecting means 4 comprises a second strengthening insert 20 molded into the second connecting means 4 for providing an increased shear strength for an attached load.

The strengthening insert 13, 20 is made of steel.

The longitudinal ridges 12', 12" is arranged in a first set of lower longitudinal ridges 12' and second set of upper longitudinal ridges 12", and further the first set of lower longitudinal ridges 12' and second set of upper longitudinal ridges 12" are separated by a glitch 16 having the length g.

The second connecting means 4 further comprises a mountable disk assembly 2, 14, wherein the mountable disk assembly 2, 14 comprise a first safety ring 14, and an optional second lock ring 2, and the first safety ring 14, and the second lock ring 2, having an inner opening form corresponding to the contour form of the kernel 11' and ridge 12', 12" form of the second connecting means 4 including a wider opening 19 around the rope 5 position allowing a twisting of the first safety ring 14 when arranged over the second connecting means 4 without damaging the rope 5, and the thickness h of the first safety ring 14 is equal to the glitch 16 length g such that when twisted the first safety ring 14 have a tight fit in the glitch 16 .

The first safety ring 14 comprises additional shims rings 106 wherein the thickness of the shims rings and the first safety ring 1 are equal to the glitch 16 length g, and the shims rings 106 having the same profile form as the first safety ring 14, or an inner diameter equal to or larger than the contour form of the kernel 11' and ridge 12', 12" form of the second connecting means 4 but less than the outer diameter of the first safety ring 14.

The first safety ring 14, and the second lock ring 2 comprise corresponding locking means 102, 103, 105 for locking the second lock ring 2 to the first safety ring 14 when arranged over the second connecting means 4 for preventing twisting movement of the first safety ring 14.

The locking means 102, 103 is one of threaded hole and screw, hole and plugs, drive through spikes, glue layer between the rings, or welding joint between the rings.

## Claims

1. A buoy comprising:
a body (10) having at least a top side (30) and a bottom side (31), the top side (30) and the bottom side (31) each comprising a recess (32), the recesses (32) being connected to provide a through channel through the whole buoy extending from the topside to the bottom side, a first connecting means (3) arranged to have a lower portion (8) inserted into the recess (32) in the top side (30),
a second connecting means (4) arranged to have a protruding lower portion (15) inserted into the recess (32) in the bottom side (31), and
a rope (5), of a type of light weight material or combination of materials, synthetic and natural, usable for being provided in a rope form for use in lifting tasks, arranged for connecting the first connecting means (1, 3) and the second connecting means (4),
wherein the rope (5), the first connecting means (3) and the second connecting means (4) constitute an armature (3,4,5), the armature (3,4,5) extending through the through channel, wherein the armature (3,4,5) is made of a light weight material, the buoy being **characterized in that**:
the protruding lower portion (15) of the second connecting means (4) comprises a kernel (11') having longitudinal ridges (12', 12") for forming a gripping pattern which provides a gripping feature when the second connecting means (4) is inserted into the corresponding recess (32) in the buoy (10).

2. Buoy according to claim 1, wherein the light weight material is chosen from one of fiber, natural fiber, polymer based material, or a combination thereof.

3. Buoy according to claim 1 or 2, wherein a strengthening plate (35) is arranged in further recesses (34) of each of the top side (30) and the bottom side (31) providing extra support for the first connecting means (3) and the second connecting means (4).

4. Buoy according to any of the previous claims, wherein the armature (3,4,5) comprises one or more ropes, wherein each rope is in the form of a singular unbroken loop.

5. Buoy according to any of claims 1 to 3, wherein the armature (3,4,5) comprises one or more single strings of rope (5) strung between the upper and lower connecting means, and each rope end is attached in a first end to the first connecting means (3), and in a second end to the second connecting means (4).

6. Buoy according to any of the previous claims, wherein the first connecting means (1, 3) comprises a protruding lower portion (8) and an upper portion having the form of a disk (9), wherein the disk (9) is peripherally bound to the lower portion (8) and presents a flat lower surface for abutment against the top side (30).

7. Buoy according to claim 6, wherein the upper portion of the first connecting means (3) comprises a first through hole (17) and a first shackle (1), the first shackle (1) being arranged in the first through hole (17).

8. Buoy according to claim 6 or 7, wherein the first connecting means (3) comprises a first strengthening insert (13) molded into the first connecting means (3) for providing an increased shear strength when attaching lifting tools.

9. Buoy according to claim 7, wherein an upper portion of the second connecting means (4) comprises a second through hole (18) and a second shackle (6), the second shackle (6) being arranged in the second through hole (18).

10. Buoy according to claim 8, wherein the second connecting means (4) comprises a second strengthening insert (20) molded into the second connecting means (4) for providing an increased shear strength for an attached load.

11. Buoy accord ing to claim 8 and/or 10, wherein the or each strengthening insert (13, 20) is made of steel.

12. Buoy according to any of claims 8 to 11, wherein the longitudinal ridges (12', 12") are arranged in a first set of lower longitudinal ridges (12') and second set of upper longitudinal ridges (12"), and further the first set of lower longitudinal ridges (12') and second set of upper longitudinal ridges (12") are separated by a glitch (16) having a length (g).

13. Buoy according to claim 12, wherein the second connecting means (4) further comprises a mountable disk assembly (2, 14), wherein
the mountable disk assembly (2, 14) comprises a first safety ring (14) and an optional second lock ring (2), and
the first safety ring (14) and the second lock ring (2) each having an inner opening form corresponding to the contour form of the kernel (11') and ridge (12', 12") form of the second connecting means (4, 6), each inner opening including a wider opening (19) around the rope (5) position allowing a twisting of the first safety ring (14) when arranged over the second connecting means (4) without damaging the rope (5), and
the thickness *(h)* of the first safety ring (14) is equal to the glitch (16) length *(g)* such that when twisted the first safety ring (14) have a tight fit in the glitch (16).

14. Buoy according to claim 13, wherein the first safety ring (14) comprises additional shims rings (106) wherein
the total thickness of the shims rings and the first safety ring (14) equals to the glitch (16) length (g), the shims rings (106) having the same profile form as the first safety ring, or having an inner diameter equal to or larger than the contour form of the kernel (11') and ridge (12', 12") form of the second connecting means (4, 6) but less than the outer diameter of the first safety ring (14).

15. Buoy according to claim 13 or 14, wherein the first safety ring (14) and the second lock ring (2) comprise corresponding locking means (102, 103, 105) for locking the second lock ring (2) to the first safety ring (14) when arranged over the second connecting means (4) for preventing twisting movement of the first safety ring (14).

16. Buoy according to claim 15, wherein the locking means (102, 103) is one of threaded hole and screw, hole and plugs, drive through spikes, glue layer between the rings, or welding joint between the rings.

## Patentansprüche

1. Boje, umfassend:
einen Körper (10), der mindestens eine Oberseite (30) und eine Unterseite (31) aufweist,
wobei die Oberseite (30) und die Unterseite (31) jeweils eine Aussparung (32) umfassen, wobei die Aussparungen (32) verbunden sind, um einen Durchgangskanal durch die gesamte Boje bereitzustellen, der sich von der Oberseite zu der Unterseite erstreckt,
ein erstes Verbindungsmittel (3), das angeordnet ist, um einen unteren Abschnitt (8) aufzuweisen, der in die Aussparung (32) in der Oberseite (30) eingeführt wird,
ein zweites Verbindungsmittel (4), das angeordnet ist, um einen vorstehenden unteren Abschnitt (15) aufzuweisen, der in die Aussparung (32) in der Unterseite (31) eingeführt wird, und
ein Seil (5) eines Typs von Leichtgewichtsmaterial oder einer Kombination von Materialien synthetischer und natürlicher Art, das bzw. die verwendbar ist, um in einer Seilform zur Verwendung bei Hubaufgaben bereitgestellt zu sein, das zum Verbinden des ersten Verbindungsmittels (1, 3) und des zweiten Verbindungsmittels (4) angeordnet ist,
wobei das Seil (5), das erste Verbindungsmittel (3) und das zweite Verbindungsmittel (4) eine Armatur (3, 4, 5) darstellen, wobei sich die Armatur (3, 4, 5) durch den Durchgangskanal erstreckt, wobei die Armatur (3, 4, 5) aus einem Leichtgewichtsmaterial hergestellt ist,
wobei die Boje **dadurch gekennzeichnet ist, dass**:
der vorstehende untere Abschnitt (15) des zweiten Verbindungsmittels (4) einen Kern (11') umfasst, der Längsstege (12', 12") zum Ausbilden eines Greifmusters aufweist, welches ein Greifmerkmal bereitstellt, wenn das zweite Verbindungsmittel (4) in die entsprechende Aussparung (32) in der Boje (10) eingeführt wird.

2. Boje nach Anspruch 1, wobei das Leichtgewichtsmaterial aus einem von Faser-, Naturfaser-, polymerbasierten Material oder einer Kombination davon ausgewählt ist.

3. Boje nach Anspruch 1 oder 2, wobei eine Verstärkungsplatte (35) in weiteren Aussparungen (34) von jeder der Oberseite (30) und der Unterseite (31) angeordnet ist und eine zusätzliche Unterstützung für das erste Verbindungsmittel (3) und das zweite Verbindungsmittel (4) bereitstellt.

4. Boje nach einem der vorhergehenden Ansprüche, wobei die Armatur (3, 4, 5) ein oder mehrere Seile umfasst, wobei jedes Seil in der Form einer einzigen ununterbrochenen Schlaufe vorliegt.

5. Boje nach einem der Ansprüche 1 bis 3, wobei die Armatur (3, 4, 5) ein oder mehrere Seilstränge (5) umfasst, die zwischen dem oberen und dem unteren Verbindungsmittel geschnürt sind, und jedes Seilende in einem ersten Ende an dem ersten Verbindungsmittel (3) und in einem zweiten Ende an dem zweiten Verbindungsmittel (4) befestigt ist.

6. Boje nach einem der vorhergehenden Ansprüche, wobei das erste Verbindungsmittel (1, 3) einen vorstehenden unteren Abschnitt (8) und einen oberen Abschnitt umfasst und die Form einer Scheibe (9) aufweist, wobei die Scheibe (9) peripher an den unteren Abschnitt (8) gebunden ist und eine flache untere Oberfläche zur Anlage an der Oberseite (30) darstellt.

7. Boje nach Anspruch 6, wobei der obere Abschnitt des ersten Verbindungsmittels (3) ein erstes Durchgangsloch (17) und einen ersten Schäkel (1) umfasst, wobei der erste Schäkel (1) in dem ersten Durchgangsloch (17) angeordnet ist.

8. Boje nach Anspruch 6 oder 7, wobei das erste Verbindungsmittel (3) eine erste Verstärkungseinlage (13) umfasst, die in das erste Verbindungsmittel (3) zum Bereitstellen einer erhöhten Scherfestigkeit beim Befestigen von Hubwerkzeugen geformt ist.

9. Boje nach Anspruch 7, wobei ein oberer Abschnitt des zweiten Verbindungsmittels (4) ein zweites Durchgangsloch (18) und einen zweiten Schäkel (6) umfasst, wobei der zweite Schäkel (6) in dem zweiten Durchgangsloch (18) angeordnet ist.

10. Boje nach Anspruch 8, wobei das zweite Verbindungsmittel (4) eine zweite Verstärkungseinlage (20) umfasst, die in das zweite Verbindungsmittel (4) zum Bereitstellen einer erhöhten Scherfestigkeit für eine befestigte Last geformt ist.

11. Boje nach Anspruch 8 und/oder 10, wobei die oder jede Verstärkungseinlage (13, 20) aus Stahl hergestellt ist.

12. Boje nach einem der Ansprüche 8 bis 11, wobei die Längsstege (12', 12") in einem ersten Satz von unteren Längsstegen (12') und einem zweiten Satz von oberen Längsstegen (12") angeordnet sind und der erste Satz von unteren Längsstegen (12') und der zweite Satz von oberen Längsstegen (12") ferner durch einen Sprung (16), der eine Länge (g) aufweist, getrennt sind.

13. Boje nach Anspruch 12, wobei das zweite Verbindungsmittel (4) ferner eine montierbare Scheibenbaugruppe (2, 14) umfasst, wobei die montierbare Scheibenbaugruppe (2, 14)
einen ersten Sicherheitsring (14) und einen optionalen zweiten Verschlussring (2) umfasst
und
der erste Sicherheitsring (14) und der zweite Verschlussring (2) jeweils eine Innenöffnungsform entsprechend der Konturform des Kerns (11') und der Form der Stege (12', 12") des zweiten Verbindungsmittels (4, 6) aufweisen, wobei jede Innenöffnung eine weitere Öffnung (19) um die Position des Seils (5) beinhaltet und ein Verdrehen des ersten Sicherheitsrings (14) bei Anordnung über dem zweiten Verbindungsmittel (4) ermöglicht, ohne das Seil (5) zu beschädigen, und
die Dicke (h) des ersten Sicherheitsrings (14) gleich der Länge (g) des Sprungs (16) ist, sodass der erste Sicherheitsring (14) beim Verdrehen einen festen Sitz in dem Sprung (16) aufweist.

14. Boje nach Anspruch 13, wobei der erste Sicherheitsring (14) zusätzliche Passscheiben (106) umfasst, wobei
die Gesamtdicke der Passscheiben und des ersten Sicherheitsrings (14) gleich der Länge (g) des Sprungs (16) ist,
die Passscheiben (106) dieselbe Profilform wie der erste Sicherheitsring aufweisen oder einen Innendurchmesser gleich oder größer der Konturform des Kerns (11') und der Form der Stege (12', 12") des zweiten Verbindungsmittels (4, 6), aber kleiner als der Außendurchmesser des ersten Sicherheitsrings (14), aufweisen.

15. Boje nach Anspruch 13 oder 14, wobei der erste Sicherheitsring (14) und der zweite Verschlussring (2) entsprechende Verriegelungsmittel (102, 103, 105) zum Verriegeln des zweiten Verschlussrings (2) mit dem ersten Sicherheitsring (14) bei Anordnung über dem zweiten Verbindungsmittel (4) umfasst, um eine Verdrehbewegung des ersten Sicherheitsrings (14) zu verhindern.

16. Boje nach Anspruch 15, wobei das Verriegelungsmittel (102, 103) eines von einem Gewindeloch und einer Gewindeschraube, einem Loch und Stopfen, Durchstoß-Spikes, einer Kleberschicht zwischen den Ringen oder einer Schweißnaht zwischen den Ringen ist.

## Revendications

1. Bouée comprenant :
un corps (10) ayant au moins un côté supérieur (30) et un côté inférieur (31),
le côté supérieur (30) et le côté inférieur (31) comprenant chacun un évidement (32), les évidements (32) étant reliés pour fournir un canal traversant à travers toute la bouée s'étendant du côté supérieur au côté inférieur,
un premier moyen de liaison (3) agencé de manière à avoir une partie inférieure (8) insérée dans l'évidement (32) du côté supérieur (30),
un second moyen de liaison (4) agencé de manière à avoir une partie inférieure saillante (15) insérée dans l'évidement (32) du côté inférieur (31), et
une corde (5), constituée d'un type de matériau léger ou d'une combinaison de matériaux, synthétiques et naturels, pouvant être fournie sous forme de corde destinée à être utilisée dans des tâches de levage, agencée pour relier le premier moyen de liaison (1, 3) et le second moyen de liaison (4) ,
dans laquelle la corde (5), le premier moyen de liaison (3) et le second moyen de liaison (4) constituent une armature (3, 4, 5), l'armature (3, 4, 5) s'étendant à travers le canal traversant, dans laquelle l'armature (3, 4, 5) est constituée d'un matériau léger,
la bouée étant **caractérisée en ce que** :
la partie inférieure saillante (15) du second moyen de liaison (4) comprend un noyau (11') ayant des crêtes longitudinales (12', 12") pour former un motif de préhension qui assure une caractéristique de préhension lorsque le second moyen de liaison (4) est inséré dans l'évidement (32) correspondant de la bouée (10).

2. Bouée selon la revendication 1, dans laquelle le matériau léger est choisi parmi une fibre, une fibre naturelle, un matériau à base de polymère ou une combinaison de ceux-ci.

3. Bouée selon la revendication 1 ou 2, dans laquelle une plaque de renforcement (35) est agencée dans d'autres évidements (34) de chacun du côté supérieur (30) et du côté inférieur (31) assurant un support supplémentaire pour le premier moyen de liaison (3) et le second moyen de liaison (4) .

4. Bouée selon l'une quelconque des revendications précédentes, dans laquelle l'armature (3, 4, 5) comprend une ou plusieurs cordes, dans laquelle chaque corde est sous la forme d'une boucle singulière ininterrompue.

5. Bouée selon l'une quelconque des revendications 1 à 3, dans laquelle l'armature (3, 4, 5) comprend une ou plusieurs ficelles simples de corde (5) enfilées entre les moyens de liaison supérieur et inférieur, et chaque extrémité de corde est fixée au niveau d'une première extrémité au premier moyen de liaison (3), et au niveau d'une seconde extrémité au second moyen de liaison (4).

6. Bouée selon l'une quelconque des revendications précédentes, dans laquelle le premier moyen de liaison (1, 3) comprend une partie inférieure saillante (8) et une partie supérieure ayant la forme d'un disque (9), dans laquelle le disque (9) est relié périphériquement à la partie inférieure (8) et présente une surface inférieure plate pour venir en butée contre le côté supérieur (30).

7. Bouée selon la revendication 6, dans laquelle la partie supérieure du premier moyen de liaison (3) comprend un premier trou traversant (17) et une première manille (1), la première manille (1) étant agencée dans le premier trou traversant (17) .

8. Bouée selon la revendication 6 ou 7, dans laquelle le premier moyen de liaison (3) comprend un premier insert de renforcement (13) moulé dans le premier moyen de liaison (3) pour assurer une résistance au cisaillement accrue lors de la fixation d'outils de levage.

9. Bouée selon la revendication 7, dans laquelle une partie supérieure du second moyen de liaison (4) comprend un second trou traversant (18) et une seconde manille (6), la seconde manille (6) étant agencée dans le second trou traversant (18).

10. Bouée selon la revendication 8, dans laquelle le second moyen de liaison (4) comprend un second insert de renforcement (20) moulé dans le second moyen de liaison (4) pour assurer une résistance au cisaillement accrue pour une charge fixée.

11. Bouée selon la revendication 8 et/ou 10, dans laquelle le ou chaque insert de renforcement (13, 20) est en acier.

12. Bouée selon l'une quelconque des revendications 8 à 11, dans laquelle les crêtes longitudinales (12', 12") sont agencées dans un premier jeu de crêtes longitudinales inférieures (12') et un second jeu de crêtes longitudinales supérieures (12"), et en outre le premier jeu de crêtes longitudinales inférieures (12') et le second jeu de crêtes longitudinales supérieures (12") sont séparés par une fissure (16) ayant une longueur (g).

13. Bouée selon la revendication 12, dans laquelle le second moyen de liaison (4) comprend en outre un ensemble disque pouvant être monté (2, 14), dans laquelle l'ensemble disque pouvant être monté (2, 14) comprend
un premier anneau de sécurité (14) et un second anneau de verrouillage (2) facultatif,
et
le premier anneau de sécurité (14) et le second anneau de verrouillage (2) ayant chacun une forme d'ouverture intérieure correspondant à la forme de contour du noyau (11') et à la forme de crête (12', 12") du second moyen de liaison (4, 6), chaque ouverture intérieure comportant une ouverture plus large (19) autour de la position de la corde (5) permettant une torsion du premier anneau de sécurité (14) lorsqu'il est agencé sur le second moyen de liaison (4) sans endommager la corde (5), et
l'épaisseur (h) du premier anneau de sécurité (14) est égale à la longueur (g) de la fissure (16), de sorte que lorsqu'il est tordu, le premier anneau de sécurité (14) s'ajuste étroitement dans la fissure (16).

14. Bouée selon la revendication 13, dans laquelle le premier anneau de sécurité (14) comprend des anneaux de cales (106) supplémentaires dans laquelle
l'épaisseur totale des anneaux de cales et du premier anneau de sécurité (14) est égale à la longueur (g) de la fissure (16),
les anneaux de cales (106) ayant la même forme de profil que le premier anneau de sécurité, ou ayant un diamètre intérieur supérieur ou égal à la forme de contour du noyau (11') et à la forme de crête (12', 12") du second moyen de liaison (4, 6) mais inférieur au diamètre extérieur du premier anneau de sécurité (14).

15. Bouée selon la revendication 13 ou 14, dans laquelle le premier anneau de sécurité (14) et le second anneau de verrouillage (2) comprennent un moyen de verrouillage (102, 103, 105) correspondant pour verrouiller le second anneau de verrouillage (2) au premier anneau de sécurité (14) lorsqu'il est agencé sur le second moyen de liaison (4) pour empêcher un mouvement de torsion du premier anneau de sécurité (14).

16. Bouée selon la revendication 15, dans laquelle le moyen de verrouillage (102, 103) est l'un parmi un trou fileté et une vis, un trou et des bouchons, des pointes traversantes, une couche de colle entre les anneaux ou un joint soudé entre les anneaux.
